(19) Europäisches Patentamt
European Patent Office
Office européen des brevets

(11) **EP 4 028 725 B1**

(12) **EUROPÄISCHE PATENTSCHRIFT**

(45) Veröffentlichungstag und Bekanntmachung des Hinweises auf die Patenterteilung:
**15.02.2023 Patentblatt 2023/07**

(21) Anmeldenummer: **20816457.4**

(22) Anmeldetag: **27.11.2020**

(51) Internationale Patentklassifikation (IPC):
**G01D 5/14** (1968.09)   **G01D 5/244** (1968.09)
**G01D 5/245** (1968.09)   **G01D 5/249** (1968.09)

(52) Gemeinsame Patentklassifikation (CPC):
**G01D 5/145; G01D 5/2449; G01D 5/2451; G01D 5/249**

(86) Internationale Anmeldenummer:
**PCT/EP2020/083675**

(87) Internationale Veröffentlichungsnummer:
**WO 2021/105387 (03.06.2021 Gazette 2021/22)**

(54) **POSITIONSBESTIMMUNG EINES BEWEGLICHEN BAUTEILS RELATIV ZU EINEM ORTSFESTEN BAUTEIL**

DETERMINING THE POSITION OF A MOVABLE COMPONENT RELATIVE TO A STATIONARY COMPONENT

DÉTERMINATION DE LA POSITION D'UN COMPOSANT MOBILE PAR RAPPORT À UN COMPOSANT FIXE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.11.2019 AT 510452019**

(43) Veröffentlichungstag der Anmeldung:
**20.07.2022 Patentblatt 2022/29**

(73) Patentinhaber: **B&R Industrial Automation GmbH**
**5142 Eggelsberg (AT)**

(72) Erfinder:
• **PLAINER, Manuel**
**5142 Eggelsberg (AT)**
• **WEBER, Andreas**
**5142 Eggelsberg (AT)**
• **ALMEDER, Alexander**
**5142 Eggelsberg (AT)**

(74) Vertreter: **Patentanwälte Pinter & Weiss OG**
**Prinz-Eugen-Straße 70**
**1040 Wien (AT)**

(56) Entgegenhaltungen:
**EP-A1- 1 615 332       EP-A1- 3 361 220**
**DE-A1-102007 036 984   DE-A1-102015 102 236**
**DE-B3-102010 010 560**

**Beschreibung**

Die gegenständliche Erfindung betrifft ein Verfahren zur Positionsbestimmung zumindest eines beweglichen Bauteils relativ zu einem ortsfesten Bauteil, wobei am bewegliche Bauteil eine Anordnung einer Mehrzahl von Positionsmagneten mit einer Polteilung und am ortsfesten Bauteil eine Anordnung einer Mehrzahl von Positionssensoren mit einer Sensorteilung angeordnet werden, wobei mit einem Positionssensor ein Magnetfeld eines Positionsmagneten im Bereich dieses Positionssensors in Form einer Sensorantwort erfasst wird. Die Erfindung betrifft auch eine Bewegungsanordnung mit einem beweglichen Bauteil und einem ortsfesten Bauteil mit Positionsbestimmung des beweglichen Bauteils relativ zum ortsfesten Bauteil.

Linearmotoren oder Planarmotoren zeichnen sich dadurch aus, dass ein beweglicher Teil (der Läufer) gegenüber einem festen Teil (dem Stator) aufgrund wechselwirkender Magnetfelder bewegt wird. Dazu ist auf einem der beiden Teile ein Antriebsmagnet (Elektromagnet oder Permanentmagnet) angeordnet, der zur Erzeugung einer Vortriebskraft mit dem Magnetfeld, das von bestromten Antriebsspulen am anderen Teil erzeugt wird, zusammenwirkt. Wird an die Antriebsspule eine Spannung angelegt, entsteht ein magnetisches Feld, das mit dem Magnetfeld des Antriebsmagneten zusammenwirkt, wodurch eine Kraft auf den beweglichen Teil erzeugt wird, die den beweglichen Teil bewegt. Zur Bewegung des Läufers wird durch entsprechende Ansteuerung der Antriebsspulen ein bewegtes Magnetfeld erzeugt. Dieses motorische Grundprinzip ist hinreichend bekannt, weshalb hier nicht näher darauf eingegangen werden muss. Dabei ist es grundsätzlich auch unerheblich, ob die Antriebsspulen auf dem bewegten Teil (Läufer) oder dem feststehenden Teil (Stator) vorgesehen sind.

Zur Regelung der Bewegung des Läufers eines Linearmotors ist es vorteilhaft dessen aktuelle Position, relativ zum Stator zu kennen, um die Antriebsspulen zur Erzeugung des bewegten Magnetfeldes richtig ansteuern zu können. Der Positionsbestimmung des Läufers kommt daher für den Betrieb des Linearmotors eine besondere Rolle zu. Hierbei ist es insbesondere schwierig, die aktuelle Position des Läufers beim Einschalten des Linearmotors zu bestimmen, weil man vorab nicht wissen kann, wo sich der Läufer zum Zeitpunkt des Einschaltens befindet. Zur Positionsbestimmung beim Einschalten des Linearmotors sind schon verschiedene Methoden vorgeschlagen worden.

Die US 7,932,684 B2 beschreibt beispielsweise einen Linearmotor, der zur Positionsbestimmung zusätzlich am Läufer angeordnete Positionsmagnete und ortsfeste Positionssensoren (z.B. am Stator angeordnet) umfasst. Wird der Läufer bewegt, bewegen sich die Positionsmagnete relativ zu den Positionssensoren und die aktuelle Position des Läufers relativ zum Stator kann bestimmt werden. Die Positionsmagnete umfassen eine erste Reihe einer Anzahl von nebeneinander angeordneten Permanentmagneten, die mit einem Inkrementalsensor zusammenwirken und eine zweite Reihe einer Anzahl von nebeneinander angeordneten Permanentmagneten, die mit einem Absolutsensor zusammenwirken. Der Absolutsensor, z.B. ein Hall-Sensor, ist so ausgeführt, dass dieser nur zwei Zustände liefert, wobei der Zustand an einer definierten Position des Läufers wechselt. Der Inkrementalsensor, z.B. ein magnetoresistiver Sensor, ist so ausgeführt, dass dieser viele wiederkehrende Sensorzyklen liefert, wobei innerhalb eines Sensorzyklus die Position sehr genau bestimmt werden kann. Beim Einschalten muss zuerst ein "Homing", also eine Referenzierung einer vorgegebenen, bekannten Nullposition, durchgeführt werden. Dazu wird der Läufer bewegt, bis der Absolutsensor einen Zustandswechsel erfasst, womit die Nullposition bestimmt ist. Ausgehend von der Nullposition kann dann die aktuelle Position des Läufers inkrementell ermittelt werden, in dem die Anzahl der Sensorzyklen gezählt wird und innerhalb der Sensorzyklen eine feine Bestimmung der Position erfolgt. Zur Bestimmung der Position des Läufers beim Einschalten ist daher in der US 7,932,684 B2 eine Referenzfahrt, also eine Bewegung des Läufers, notwendig. Diese Art der Positionserfassung ist aber nur bei relativ eingeschränkten Bewegungsbereichen des Läufers sinnvoll zu realisieren. Für viele Anwendungen, insbesondere für Linearmotoren mit großem Bewegungsspielraum oder für Langstatorlinearmotoren mit einer Vielzahl von Läufern, ist diese Art der Positionsbestimmung natürlich absolut ungeeignet.

Die Bestimmung einer Absolutposition, auch beim Einschalten des Linearmotors, kann der US 7,994,742 B2 entnommen werden. Dabei ist über den möglichen Bewegungsspielraum ein länglicher Positionsmagnet am Läufer angeordnet, wobei der Positionsmagnet so angeordnet ist, dass sich ein positionsabhängiger Offset in Querrichtung ergibt. An einer ortsfesten Konstruktion, z.B. dem Stator, ist ein Positionssensor angeordnet, der das Magnetfeld des Positionsmagneten erfasst. Aufgrund des Offsets ergibt sich an jeder Position des Läufers ein eindeutiges Magnetfeld, das vom Positionssensor erfasst wird. Damit kann auch beim Einschalten des Linearmotors sofort und ohne Bewegung des Läufers auf die aktuelle Position des Läufers geschlossen werden. Der Bewegungsspielraum ist dabei aber natürlich auf die Länge des Positionsmagneten beschränkt und damit sehr limitiert. Für viele Anwendungen, insbesondere für Linearmotoren mit großem Bewegungsspielraum oder für Langstatorlinearmotoren mit einer Vielzahl von Läufern, ist diese Art der Positionsbestimmung natürlich absolut ungeeignet.

Die US 6,876,107 B2 beschreibt als Linearmotor einen bekannten Langstatorlinearmotor. Ein solcher Langstatorlinearmotor umfasst eine Vielzahl von Antriebsspulen, die ortsfest, nebeneinander angeordnet sind und den Stator des Langstatorlinearmotors ausbilden. Entlang des Stators kann eine Vielzahl von Läufern angeordnet sein, die entlang des Stators bewegt werden können. Jeder Läufer trägt einen Antriebsmagneten. Zur Bewegung des Läufers werden jeweils die Antriebsspulen bestromt, die gerade mit einem Läufer zusammenwirken. Auf diese Weise können einzelne Läufer unabhängig voneinander entlang des Stators bewegt werden. Solche Langstatorlinearmotoren werden häufig in flexiblen Transportsystemen eingesetzt, beispielsweise in einem Produktionsprozess oder in der Fördertechnik. Die US 6,876,107 B2 beschreibt ferner die Bestimmung einer echten Absolutposition ("true absolute position"), die es ermöglicht, sofort beim Einschalten des Langstatorlinearmotors die genaue Position eines Läufers zu bestimmen, ohne hierfür ein Referenzieren (beispielsweise durch eine Referenzfahrt des Läufers) durchführen zu müssen. Das ist natürlich sehr vorteilhaft, ganz besonders wenn man bedenkt, dass in einem Langstatorlinearmotor nicht selten einige hundert Läufer gleichzeitig vorhanden sein können. Dafür ist an einem Läufer genau ein zusätzlicher Positionsmagnet angeordnet und entlang des Stators sind eine Vielzahl von Positionssensoren, z.B. magnetoresistive Sensoren, angeordnet, die das Magnetfeld des Positionsmagnets erfassen. Die Positionssensoren müssen dabei aber so eng angeordnet sein, dass sichergestellt ist, dass zu jedem Zeitpunkt zumindest ein Positionssensor das Magnetfeld des Positionsmagneten erfassen kann. Beim Einschalten des Langstatorlinearmotors spricht damit für jeden Läufer zumindest ein Positionssensor an, womit die Positionsbestimmung auch ohne ein Referenzieren des Läufers möglich ist. Der Nachteil dabei ist, dass ein zusätzlicher Positionsmagnet erforderlich ist und die Positionssensoren sehr engmaschig angeordnet sein müssen, was eine hohe Anzahl solcher Positionssensoren notwendig macht.

Die EP 3 376 166 A1 beschreibt wiederum die Positionserfassung für Läufer eines Langstatorlinearmotors beim Einschalten des Motors. Hierbei werden die Antriebsmagnete am Läufer zur Positionserfassung verwendet und es sind keine zusätzlichen Positionsmagnete zur Positionserfassung erforderlich. Die Positionssensoren können dabei auch in einem weiteren Abstand voneinander entfernt angeordnet sein, womit die Anzahl der benötigten Positionssensoren verkleinert werden kann. Für die Positionserfassung wird zuerst eine Grobposition des Läufers bestimmt, indem ein Randbereich einer Anordnung von Antriebsmagneten am Läufer bestimmt wird. Für einen der Antriebsmagnet wird ein Positionssensor ermittelt, der das Magnetfeld dieses Antriebsmagneten erfasst. Mit diesem Positionssensor kann dann eine Relativposition des Läufers relativ zum Positionssensor bestimmt werden. Nachdem die Einbauposition des Positionssensors bekannt ist, kann mit der bekannten Einbauposition und der ermittelten Relativposition die Absolutposition des Läufers ermittelt werden. Obwohl diese Methode sehr zuverlässig funktioniert, hat diese auch Schwachstellen. Insbesondere wenn zwei Läufer sehr nahe beieinanderstehen oder sogar aneinander anliegen, kann diese Methode versagen, weil der Randbereich nicht oder nur unzuverlässig bestimmt werden kann, oder weil nicht erkannt werden kann, dass mehrere Läufer eng nebeneinander liegen.

Ähnliche Probleme treten auch bei Positionsmesssystemen auf, bei denen an einem bewegten Teil Positionsmagnete angeordnet sind, deren Magnetfeld von Positionssensoren an einem feststehenden Teil erfasst wird. Eine solche Anordnung zeigt beispielsweise EP 3 361 220 A1. Auch hier besteht das grundlegende Problem, beim Einschalten festzustellen, wie der bewegte Teil, oder auch möglicherweise mehrere bewegte Teile, relativ zum feststehenden Teil positioniert ist bzw. sind.

Es ist daher die Aufgabe der gegenständlichen Erfindung ein Verfahren zur Bestimmung der Position eines beweglichen Bauteils mit einer Mehrzahl von Positionsmagneten relativ zu einem feststehenden Bauteil mit einer Mehrzahl von Positionssensoren anzugeben. Das Verfahren soll dabei insbesondere auch in der Lage sein, mehrere eng oder ganz aneinander liegende bewegliche Bauteile zu erkennen und die zuverlässige Positionsbestimmung auch für solche eng oder ganz aneinander liegende beweglichen Bauteile zu ermöglichen.

Diese Aufgabe wird mit den Merkmalen der unabhängigen Ansprüche gelöst. Durch die Verwendung eines Sensormodells kann die unbekannte Position des beweglichen Bauteils gefunden werden, in dem die Sensormodellantworten mit den tatsächlich gemessenen Sensorantworten unter Variation der angenommenen Position des beweglichen Bauteils verglichen werden. Dieses Verfahren ist einerseits sehr robust, in dem es eine zuverlässige Positionsbestimmung ermöglicht, auch bei Abweichungen durch eine ungenaue Einbaulage der Positionssensoren oder bei Abweichungen in den Positionsmagneten. Das Sensormodell beschreibt den Verlauf der Sensorantwort eines Positionssensors, wenn die Anordnung der Positionsmagnete daran vorbeibewegt wird. Das Sensormodell muss damit nur einmal bestimmt werden und kann dann für jeden Positionssensor verwendet werden. Andererseits können durch die Verwendung von Sensormodellen auch eng oder ganz aneinander liegende bewegliche Bauteile erkannt und identifiziert werden. Das Verfahren ist nicht nur in der Lage zu erkennen wo sich ein beweglicher Bauteil befindet, sondern auch welcher bewegliche Bauteil (falls es unterschiedliche bewegliche Bauteile gibt) sich wo befindet.

Die gegenständliche Erfindung wird nachfolgend unter Bezugnahme auf die Figuren 1 bis 9 näher erläutert, die beispielhaft, schematisch und nicht einschränkend vorteilhafte Ausgestaltungen der Erfindung zeigen. Dabei zeigt

Fig.1 eine Bewegungsanordnung mit einem ortsfesten Bauteil und einem relativ dazu beweglichen Bauteil,
Fig.2 ein typisches Magnetfeld einer Anordnung von Positionsmagneten am beweglichen Bauteil,

Fig.3 ein typisches Sensorsignal eines Positionssensors;

Fig.4 eine typische aus dem Sensorsignal gewonnen Sensorantwort eines Positionssensors,

Fig.5 einen typischen Verlauf der Sensorantwort in Abhängigkeit einer Relativposition des beweglichen Bauteils relativ zum Positionssensor, als Beispiel eines Sensormodells,

Fig.6 eine alternative Art der Speicherung eines Sensormodells,

Fig.7 eine mögliche Situation bei der Positionsbestimmung,

Fig.8 einen möglichen Verlauf des Wertes einer Kostenfunktion in Abhängigkeit einer angenommenen Relativposition und

Fig.9 eine Positionsbestimmung im Bereich einer Weiche bei einem Langstatorlinearmotor als Ausführungsbeispiel einer Bewegungsanordnung.

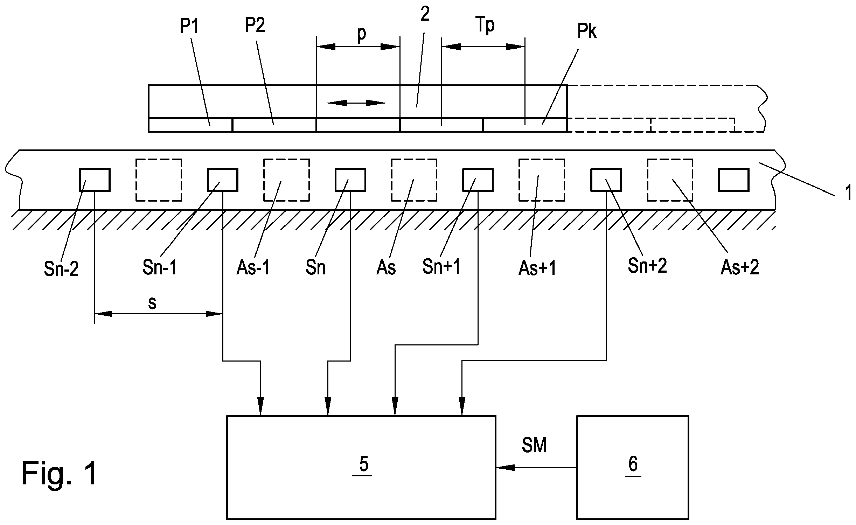

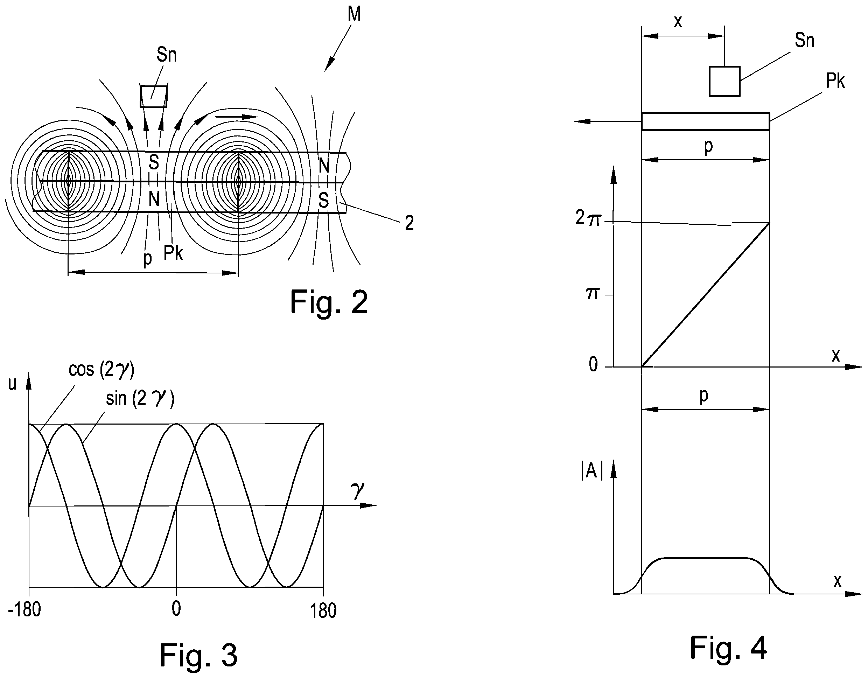

Die Erfindung geht, wie in Fig.1 dargestellt, von einer Bewegungsanordnung aus, bei der an einem ortsfesten Bauteil 1 nebeneinander eine Mehrzahl von Positionssensoren Sn mit n > 1 angeordnet sind und an einem beweglichen Bauteil 2 nebeneinander eine Anzahl von Positionsmagnete Pk mit k > 1, Permanentmagnete oder Elektromagnete, angeordnet sind. Der bewegliche Bauteil 2 wird relativ zum ortsfesten Bauteil 1 bewegt. Der bewegliche Teil 2 ist so angeordnet, dass die Positionssensoren Sn ein Magnetfeld eines Positionsmagneten Pk erfassen können. Üblicherweise bedeutet das, dass die Positionsmagnete Pk am beweglichen Bauteil 2 dem ortsfesten Bauteil 1 zugewandt angeordnet sind und die Positionssensoren Sn, jeweils mit ihrer aktiven Fläche, dem beweglichen Bauteil 2 zugewandt angeordnet sind. Die Positionsmagnete Pk müssen dabei nicht unmittelbar aneinander liegend angeordnet sein wie in Fig.1 dargestellt. Der Abstand zwischen zwei benachbarten Positionsmagnete Pk wird als Polteilung Tp bezeichnet. Die Polteilung Tp kann, muss aber nicht, gleich der Positionsmagnetbreite p sein. Die Polteilung Tp kann, muss aber nicht unbedingt, kleiner sein, als der Sensorabstand s zwischen zwei benachbarten Positionssensoren Sn. Die Positionsmagnete Pk können am beweglichen Bauteil 2 mit abwechselnder Polarität angeordnet sein (siehe auch Fig.2). Bei einem Planarmotor ergibt sich eine solche Anordnung in einer Ebene in zwei Richtungen.

Eine derartige Bewegungsanordnung kommt in vielen Anwendungen vor. Ein Beispiel ist ein Linearmotor, Langstatorlinearmotor oder Planarmotor, bei denen am ortsfesten Bauteil 1 zusätzlich eine Mehrzahl von Antriebsspulen As mit s > 1 angeordnet sind, wie in Fig.1 strichliert angedeutet. Bei einem Planarmotor sind die Antriebsspulen As in einer Ebene angeordnet und bei einem Linearmotor oder Langstatorlinearmotor nebeneinander in einer Bewegungsrichtung. In diesem Fall bildet der ortsfeste Bauteil 1 den Stator des Motors aus, entlang dem der bewegliche Bauteil 2 bewegbar ist. Am beweglichen Bauteil 2, der in dieser Anwendung den Läufer des Motors ausbildet, ist eine Mehrzahl von Antriebsmagneten angeordnet. Dabei können die Antriebsmagnete gleichzeitig die Positionsmagnete Pk sein (wie beispielsweise in der EP 3 376 166 A1 beschrieben) oder die Antriebsmagnete und die Positionsmagnete Pk sind getrennt voneinander vorgesehen. Werden die Antriebsspulen As im Bereich des beweglichen Bauteils 2 bestromt (durch Anlegen einer elektrischen Spannung), beispielsweise unter Kontrolle eines nicht dargestellten Antriebsreglers, wird ein Antriebsmagnetfeld erzeugt, das mit dem Magnetfeld der Antriebsmagnete am beweglichen Bauteil 2 zusammenwirkt, um eine Vortriebskraft auf den beweglichen Bauteil 2 zu erzeugen. Die Antriebsmagnete können dabei Permanentmagnete oder Elektromagnete sein. Im Falle von Elektromagneten könnten anstelle von Antriebsspulen As auch Permanentmagnete am ortsfesten Bauteil 1 vorgesehen sein. Dieses Motorprinzip ist hinlänglich bekannt, weshalb hier nicht näher darauf eingegangen wird.

Eine andere Anwendung ist eine reine Positionserfassung in einer Bewegungsanordnung mit einem relativ zum ortsfesten Bauteil 1 beweglichen Bauteil 2, beispielsweise ein Schlitten an einer Werkzeugmaschine. Bei dieser Anwendung wird der bewegliche Teil 2 durch irgendeinen anderen Mechanismus bewegt und die Position des beweglichen Teils 2 relativ zum ortsfesten Bauteil 1 soll ermittelt werden.

Die verwendeten Positionssensoren Sn messen das Magnetfeld M, z.B. Betrag und/oder Richtung, des Magnetfeldes eines Positionsmagnetes Pk im Bereich des jeweiligen Positionssensors Sn. Mögliche Positionssensoren Sn sind magnetostriktive Sensoren, magnetoresistive Sensoren (wie ein Anisotroper-Magneto-Resistiver Sensor, ein Tunnel-Magneto-Resistance Sensor oder Giant-Magneto-Resistance Sensor) oder ein Hallsensor. Daneben können natürlich noch weitere Sensortypen existieren, die in der Lage sind ein Magnetfeld M zu erfassen. Unterschiedliche Typen von Sensoren können auch den Betrag des Magnetfeldes M (falls dieser erfasst wird) unterschiedlich angeben. Ein Hallsensor liefert beispielsweise einen Wert, der die Magnetfeldintensität angibt (z.B. in Tesla), wobei der Hallsensor üblicherweise nicht in Sättigung betrieben wird. Ein magnetoresistiver Sensor hingegen liefert einen Wert in einem bestimmten Wertebereich, z.B. zwischen Null und Eins, wobei der Sensor aber in der Regel Sättigung betrieben wird. D.h., dass ein solcher Sensor für einen weiten Bereich der Magnetfeldintensität beispielsweise den Wert Eins liefert. Damit kann mit einem solchen Sensor üblicherweise kein absoluter Wert der Magnetfeldintensität des Magnetfeldes M erhalten werden, sondern nur Aussagen darüber getroffen werden ob sich der jeweilige Sensortyp im Sättigungsbereich befindet oder nicht.

In Fig.2 ist beispielhaft das Magnetfeld M einer Anordnung von Positionsmagneten Pk am beweglichen Bauteil 2 in Form der Magnetfeldlinien dargestellt. Man erkennt, dass das Magnetfeld M in der Mitte eines Magnetpoles am stärksten ist und gegen den Rand hin rasch abfällt. Ebenso ist erkennbar, dass das Magnetfeld M im umliegenden Bereich, also auch mit größerem Abstand zum Positionsmagneten Pk, relativ schnell stark abnimmt. Es ist daher vorteilhaft, wenn der Luftspalt zwischen Positionssensor Sn und dem Positionsmagneten Pk nicht mehr als die halbe Polteilung Tp beträgt, um die Zuverlässigkeit der Messung zu erhöhen.

Ein Positionssensor Sn liefert als Sensorsignal beispielsweise eine Sinus- und Cosinusspur (in der Form eines elektrischen Spannungsmesswertes u) wie in Fig.3 dargestellt. Bekannterweise kann aus den Sensorsignalen (Sinus- und Cosinusspur), z.B. in Form einer Spannung u, abhängig vom Winkel $\gamma$ des Magnetfeldes M, also der Winkel in dem das Magnetfeld M am Positionssensor Sn auftrifft, in linearer Näherung die Position x eines einzelnen beweglichen Positionsmagneten Pk proportional zum Magnetfeldwinkel $\gamma$ des Magnetfeldes M ermittelt werden, beispielsweise als x = k*arctan $(\sin(2\gamma)/\cos(2\gamma))$, mit k als konstantem Faktor, z.B. k=p/$(2\pi)$). Der Positionssensor Sn kann als Sensorantwort SA aber natürlich direkt die Position x liefern, oder die Sinus- und Cosinusspur die dann ausgewertet wird, oder eine Winkelinformation $\gamma$. Ebenso kann der Positionssensor Sn (in Abhängigkeit vom Typ des Sensors) als Sensorantwort SA einen Absolutwert |A| für den Betrag des Magnetfeldes M (Amplitude der Sinus- und Cosinusspur), liefern, beispielsweise als

$$|A| = \sqrt{u\sin^2(2\gamma) + u\cos^2(2\gamma)}$$

. Die Sensorantwort SA kann damit auch mehrere Größen enthalten, beispielsweise Winkelinformation $\gamma$ und Absolutwert |A|.

Wird ein Positionsmagnet Pk an einem Positionssensor Sn vorbeibewegt, ergibt sich der typische sägezahnähnlichen Verlauf der Winkelinformation $\gamma$ zwischen Null und $2\pi$ (Wert in Abhängigkeit vom Sensor) und der Verlauf des Absolutwertes |A| in Abhängigkeit von der Position x des Positionsmagneten Pk relativ zum Positionssensor Sn, wie in Fig.4 dargestellt. Der Absolutwert |A| kann dabei großteils konstant sein, wenn der Positionssensor Sn in Sättigung geht, wie beispielsweise bei einem magnetoresistiven Sensor. Bei anderen Sensortypen, beispielsweise bei einem Hallsensor, kann sich auch ein anderer Verlauf des Absolutwertes |A| ergeben. Andere Sensortypen können auch andere das erfasste Magnetfeld repräsentierende Sensorsignale und/oder Sensorantworten SA liefern.

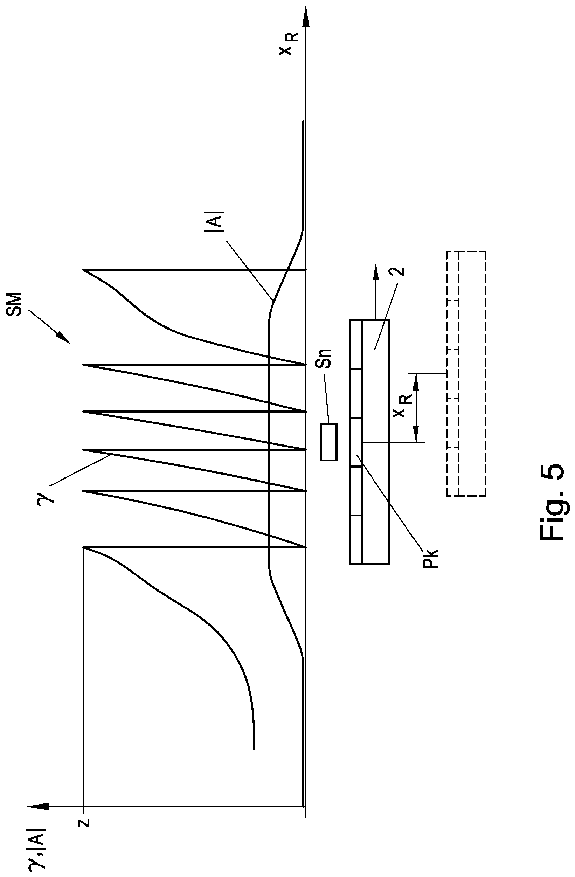

Wird eine Anordnung von Positionsmagneten Pk mit k>1 am beweglichen Bauteil 2 (z.B. wie in Fig.1 gezeigt) an einem Positionssensor Sn vorbeibewegt, ergibt sich somit ein sägezahnähnlicher Verlauf der Winkelinformation $\gamma$ und/oder Verlauf des Absolutwertes |A| über die Relativposition $x_R$ des beweglichen Bauteils 2 relativ zum ortsfesten Bauteil 1, wie in Fig.5 für k=5 Positionsmagnete Pk dargestellt.

Der Wert der Winkelinformation $\gamma$ kann auch mit einem konstanten Faktor skaliert sein. Beispielsweise kann festgelegt sein, dass der Positionssensor Sn bei der Mitte des Positionsmagneten Pk für die Winkelinformation $\gamma$ den Wert $\pi/2$ liefert. Nach Fig.4 wäre der Wert $\pi$ zu erwarten. Es wird damit mit dem Faktor -$\pi/2$ skaliert. Wenn der Rand des Positionsmagneten Pk vom Sensor gemessen wird ergäbe sich somit $3\pi/2$ und der Wert 0 würde bei ¼ des Positionsmagneten Pk geliefert. Eine derartige Skalierung ist auch der Grund, warum in Fig.5 für fünf Positionsmagnete Pk sechs sägezahnförmige Spitzen im Verlauf der Winkelinformation $\gamma$ enthalten sind. Eine solche Skalierung ist für die Erfindung jedoch unerheblich, sie muss nur bekannt sein und einheitlich angewendet werden.

Man erkennt in Fig.5 auch den nichtlinearen Verlauf der Winkelinformation $\gamma$, insbesondere im Randbereich des beweglichen Bauteils 2, und auch die Feldaufweitung (ergibt breitere sägezahnförmig Spitzen am Rand) am Rand der Anordnung der Positionsmagnete Pk als Folge des Magnetfeldes M wie in Fig.2 dargestellt.

Die Relativposition $x_R$ zwischen dem beweglichen Bauteil 2 und dem Positionssensor Sn wird dabei auf einen beliebigen Punkt des beweglichen Bauteils 2, beispielsweise auf die Mitte (in Bewegungsrichtung gesehen) oder auf ein Ende des beweglichen Bauteils 2 oder der Anordnung der Positionsmagnete Pk bezogen. In Fig.2 ist beispielsweise die Mitte der Anordnung der Positionsmagneten Pk als Nullpunkt der Relativposition $x_R$ gewählt, wie durch die strichlierte dargestellt, verschobene Position des beweglichen Teils 2 angedeutet. Es würden sich somit je nach Position des beweglichen Bauteils relativ zum ortsfesten Positionssensor Sn positive und negative Werte der Relativposition $x_R$ bezogen auf den gewählten Nullpunkt ergeben. Die Relativposition $x_R$ gibt die Position des beweglichen Bauteils 2 relativ zu einem Positionssensor Sn an.

Ist die Position x(i) (egal ob als Absolutposition oder Relativposition) des beweglichen Bauteils 2 im aktuellen Abtastzeitpunkt (i) (in welchem zeitlichen Intervall die Position bestimmt wird) erst einmal bekannt, so kann aus der ermittelten Position x(i-1) des vorherigen Abtastzeitpunkts (i-1) trivial die aktuelle Position x(i), beispielsweise aus der bekannten Bewegung des beweglichen Bauteils 2, ermittelt werden. Das Hauptproblem liegt jedoch darin, die Position x(i) unabhängig der Information der Position x(i-1) des vorherigen Abtastzeitpunkt (i-1), also beispielsweise und insbesondere initial beim Einschalten oder Hochfahren des Systems, zu bestimmen.

Beim Einschalten oder Hochfahren können zwar alle Positionssensoren Sn am ortsfesten Bauteil 1 ausgelesen werden, es kann aber nicht gesagt werden, welcher Positionsmagnet Pk eines beweglichen Bauteils 2 mit einem bestimmten Positionssensor Sn erfasst wird. Jeder Positionsmagnet Pk am beweglichen Bauteil 2 kann bei einem bestimmten Positionssensor Sn dieselbe Sensorantwort SA, beispielsweise dieselbe Winkelinformation $\gamma$, hervorrufen. Die mit einen Positionssensor Sn gemessene Sensorantwort SA ist somit nicht eindeutig. Um diese Mehrdeutigkeit aufzulösen und auch in solchen Situationen eine zuverlässige Positionsbestimmung zu ermöglichen, wird erfindungsgemäß wie folgt vorgegangen.

Für eine vorgegebene Kombination einer bekannten Anordnung von Positionsmagneten Pk (Pollänge p, Polteilung Tp, Orientierung und Polarität der Positionsmagnete Pk usw.) an einem beweglichen Bauteil 2 und einem bestimmten bekannten Positionssensor Sn an einem ortsfesten Bauteil 1 (Sensortyp, Abstand Sensor zu Positionsmagneten usw.) kann ein Sensormodell SM bestimmt werden, das eine Sensormodellantwort SA*, beispielsweise die Winkelinformation $\gamma$* und/oder der Absolutwert |A|*, in Abhängigkeit der Relativposition $x_R$ des beweglichen Bauteils 2 relativ zum ortsfesten Bauteil 1 bzw. zum Positionssensor Sn ermittelt. Für die Winkelinformation $\gamma$* und den Absolutwert |A|* entspricht das Sensormodell SM beispielsweise dem Verlauf dieser Größen wie in Fig.5 dargestellt. Das Sensormodell SM gibt somit an, welche Werte der Sensorantwort SA mit einem bestimmten Positionssensor Sn bei verschiedenen Relativpositionen $x_R$ eines bestimmten beweglichen Bauteils 2 erwartet werden können. Ein solches Sensormodell SM kann für eine bestimmte Kombination der Anordnung von Positionsmagneten Pk und eines Positionssensors Sn beispielsweise messtechnisch ermittelt werden, indem die Anordnung der Positionsmagnete Pk am Positionssensor Sn vorbeibewegt wird und dabei die Sensormodellantwort SA* erfasst und gespeichert wird. Das Sensormodell SM kann aber gleichfalls durch Simulation oder Berechnung ermittelt werden. Auch dabei kann die Sensormodellantwort SA* erfasst werden. Dieses Sensormodell SM wird gespeichert.

Das Sensormodell SM wird somit ermittelt, indem der Verlauf der Sensormodellantwort SA* erfasst wird, wenn die gesamte Anordnung der Mehrzahl von Positionsmagneten Pk am ortsfesten Bauteil 1 entlang des Positionssensors Sn vorbeibewegt wird. Während des Vorbeibewegens werden die Sensorantworten SA des Positionssensors Sn als Sensormodellantwort SA* erfasst. Das Sensormodell SM ist damit von der Anordnung der Positionssensoren Sn am ortsfesten Bauteil entkoppelt, weil nur die Sensormodellantwort SA* bezogen auf einen Positionssensor Sn erfasst werden.

Falls mehrere verschiedene bewegliche Bauteile 2 vorhanden sind, z.B. mit unterschiedlicher Anzahl Positionsmagneten Pk, wie beispielsweise bei einem Langstatorlinearmotor oder Planarmotor durchaus üblich, oder wenn verschiedene Positionssensoren Sn am ortsfesten Bauteil 1 vorgesehen sind, dann gibt es natürlich für jede mögliche Kombination der Anordnung von Positionsmagneten Pk und einem Positionssensor Sn ein zugehöriges Sensormodell SM.

Das Sensormodell SM, oder die Sensormodelle SM, muss für eine bestimmte Bewegungsanordnung natürlich nur einmal ermittelt werden. Für die Durchführung des Verfahrens zur Positionsbestimmung kann das Sensormodell SM folglich als bekannt und gegeben vorausgesetzt werden.

Das Sensormodell SM kann in Form der Werte der Sensormodellantwort SA*, also beispielsweise der Werte der Winkelinformation $\gamma$* und/oder der Absolutwerte |A|*, in Abhängigkeit der Relativposition $x_R$ wie in Fig.5 gespeichert werden. Das kann aber sehr viel Speicher benötigen, insbesondere wenn das Sensormodell SM mit hoher Auflösung der Relativposition $x_R$ und/oder der Sensormodellantwort SA* gespeichert werden soll.

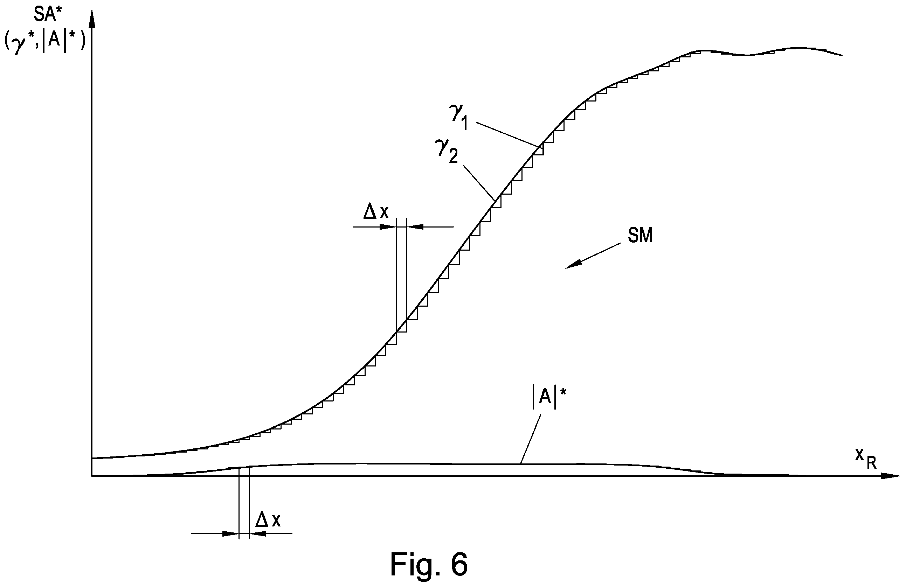

Aus diesem Grund ist es möglich, das Sensormodell SM der Sensormodellantwort SA* auch in anderer Form abzuspeichern, wie anhand der Fig.6 erläutert wird. Das Sensormodell SM nach Fig.5 wird in Positionsinkrementen $\Delta x$ diskretisiert und die Überläufe (Anzahl abhängig von der Anzahl der Positionsmagnete Pk) des sägezahnförmigen Verlaufs der Winkelinformation $\gamma$* mit der Höhe z (z.B. $2\pi$) wird über die Relativposition $x_R$ aufsummiert. Das ergibt den diskreten Verlauf der Winkelinformation $\gamma_1$ in Fig.6. In diesen diskreten Verlauf wird eine möglichst glatte Kurve approximiert, beispielsweise ein Polynomzug (Spline) oder eine andere geeignete glatte Kurve. Ein Spline ist bekanntermaßen eine Funktion, die stückweise aus Polynomen eines bestimmten Grades zusammengesetzt ist, wobei die diskreten Punkte die Stützstellen des Splines sein können. Die durch die Kurve approximierte Winkelinformation $\gamma_2$ kann dann als Sensormodell SM in Form der mathematischen Beschreibung der gewählten Kurve gespeichert werden, was wesentlich weniger Speicherbedarf bedarf. Aus der approximierten Winkelinformation $\gamma_2$ kann der sägezahnförmige Verlauf der Winkelinformation $\gamma$* einfach durch die Anwendung der Modulo Funktion mod berechnet werden, also $\gamma$*$(x_R) = \gamma_2(x_R)$ mod z (beispielsweise z = $2\pi$).

Der Verlauf des Absolutwertes |A|* im Sensormodell SM könnte ebenfalls mit Positionsinkrementen $\Delta x$ diskretisiert werden, um Stützstellen zu erhalten, in die dann eine glatte Kurve, beispielsweise wieder ein Spline, approximiert werden kann. Damit wäre es auch möglich, den Verlauf des Absolutwertes |A|* speichersparend in Form einer mathematischen Beschreibung der Kurve zu speichern. In diesem Fall kann der Wert des Absolutwertes |A|* zu einer bestimmten Relativposition $x_R$ direkt aus der gespeicherten Kurve ermittelt werden.

In gleicher Weise kann auch bei anderen oder zusätzlichen Sensorantworten SA bzw. Sensormodellantworten SA* des Sensormodells SM vorgegangen werden.

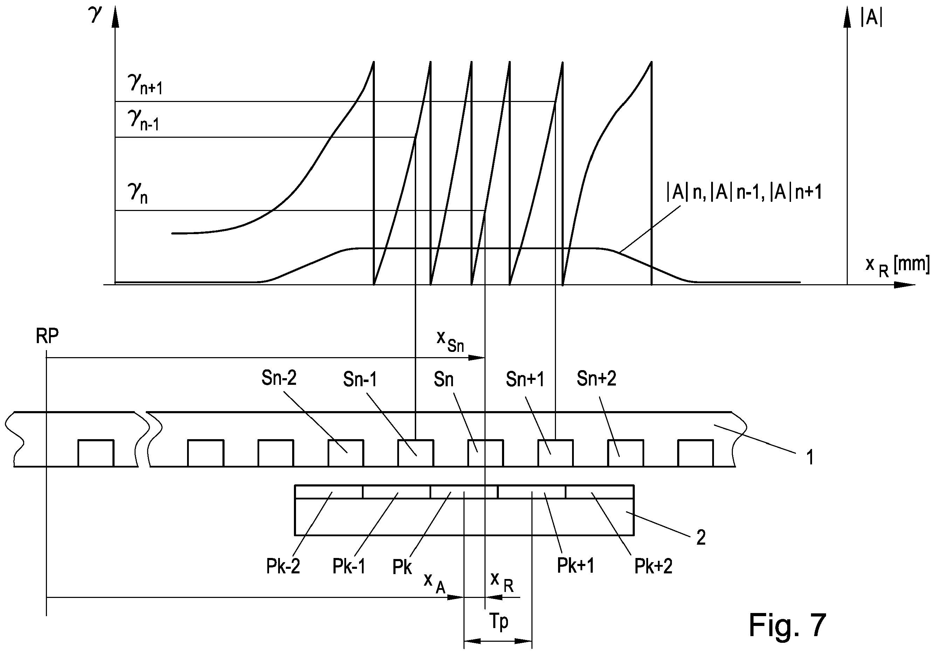

Ein beweglicher Teil 2 mit einer Anzahl von Positionsmagneten Pk, der in einer bestimmten Relativposition $x_R$ relativ zum ortsfesten Bauteil 1 mit den Positionssensoren Sn steht, ist in Fig.7 dargestellt. In dieser Relativposition $x_R$ des beweglichen Bauteils 2 bewirken die Magnetfelder M der Positionsmagnete Pk am beweglichen Bauteil 2 Sensorantworten SA einer bestimmten Anzahl von Positionssensoren Sn im Bereich des beweglichen Bauteils 2. Wie viele Positionssensoren Sn ansprechen hängt natürlich vom Sensorabstand s und auch von der Stärke der Magnetfelder ab. Für die Positionsbestimmung werden vorzugsweise nur solche Positionssensoren Sn berücksichtigt, die ansprechen. Hierbei kann ein Grenzwert der Sensorantwort SA, beispielsweise für den Absolutwert |A|, festgelegt sein, ab dem eine Sensorantwort SA eines Positionssensors Sn als Messwert berücksichtigt wird. Es kann aber auch immer eine vorgegebene Anzahl von Positionssensoren Sn im Bereich des beweglichen Bauteils 2 berücksichtigt werden. Die für die Positionsbestimmung berücksichtigten j Positionssensoren $Sn_j$ sind üblicherweise eine Teilmenge der vorhandenen Positionssensoren Sn.

Betrachtet man einen Positionssensor Sn, so liefert dieser eine entsprechende Sensorantwort SAn, beispielsweise die Winkelinformation γn und den Absolutwert |A|n, in Abhängigkeit der Position eines Positionsmagneten Pk, dessen Magnetfeld M gemessen wird, relativ zum Positionssensor Sn (wie in Fig.4 dargestellt). Ebenso liefern die anderen berücksichtigten Positionssensoren Sn-1, Sn+1 Sensorantworten, beispielsweise Winkelinformationen γn-1, yn+1 und Absolutwerte |A|n-1, |A|n+1. Alle j ≥ 1 berücksichtigten Positionssensoren Sn; liefern jeweils eine Sensorantwort $SA_j$.

Zusätzlich ist das Sensormodell SM zu diesem beweglichen Bauteil 2 und den vorhandenen Positionssensoren Sn bekannt. Die Aufgabe besteht nun darin, die Relativposition $x_R$ des beweglichen Bauteils 2 so zu bestimmen, dass sich die Sensormodellantworten $SA_j^*$ der berücksichtigten Positionssensoren $Sn_j$ aus dem Sensormodell SM bestmöglich mit den tatsächlich erfassten Sensorantworten $SA_j$ der berücksichtigten Positionssensoren $Sn_j$ decken.

Eine bestimmte Relativposition $x_R$ des beweglichen Bauteils 2 liefert somit aus dem Sensormodell SM Sensormodellantworten $SA_j^*$ der berücksichtigten Positionssensoren $Sn_j$.

Diese Sensormodellantworten $SA_j^*$ werden mit den tatsächlich mit den berücksichtigten Positionssensoren Snj erfassten Sensorantworten $SA_j$ verglichen. Dazu wird die Relativposition $x_R$ des beweglichen Bauteils 2 variiert und zu jeder variierten Relativposition $x_{Rv}$ wird die Sensormodellantwort $SA_j^*(x_{Rv})$ aus dem Sensormodell SM ermittelt. Diese Variation ist natürlich nur angenommen und der bewegliche Bauteil 2 wird dazu nicht physisch am ortsfesten Bauteil 1 bewegt. Diejenige Relativposition $x_{Rv}$ mit der kleinsten Abweichung der Sensormodellantworten $SA_j^*(x_{Rv})$ aus dem Sensormodell SM und den tatsächlich erfassten Sensorantworten $SA_j$ wird dann verwendet, um die Relativposition $x_R$ des beweglichen Bauteil 2 relativ zum ortfesten Bauteil 1 zu bestimmen.

Aus der ermittelten Relativposition $x_R$ kann dann mit der bekannten Geometrie des beweglichen Bauteils 2 und des ortsfesten Bauteils 1 und mit den bekannten Einbauorten der Positionssensoren Sn einfach die Absolutposition $x_A$ ermittelt werden. Die Absolutposition $x_A$ ist auf einen vorgegebenen ortsfesten Referenzpunkt RP bezogen (Fig.7), der an einer beliebigen Stelle festgelegt sein kann, üblicherweise ein Punkt am ortsfesten Bauteil 1. Die Einbauposition $x_{Sn}$ der Positionssensoren Sn ist bekannt. Damit kann die Absolutposition $x_A$ beispielsweise einfach aus $x_A = xs, + x_R$ berechnet werden. Die Absolutposition $x_A$ könnte aber natürlich auch auf jeden anderen beliebigen Punkt des beweglichen Bauteils 2 bezogen sein.

Die Relativposition $x_{Rv}$ des beweglichen Bauteils 2 kann für die Umsetzung des Verfahrens zur Positionsbestimmung auf verschiedene Weise variiert werden, wie nachfolgen erläutert wird. Für die folgende Beschreibung wird als Sensorantwort SA die Winkelinformation γ und der Absolutwert |A| angenommen. Für die Erfindung kann aber auch nur eine dieser Größen als Sensorantwort SA herangezogen werden, oder auch eine andere von den Positionssensoren Sn gelieferte Größe oder auch zusätzliche von den Positionssensoren Sn gelieferte Größen verwendet werden. Die verwendeten Sensorantworten SA können direkt von den Positionssensoren Sn bereitgestellt werden, oder können auch aus von den Positionssensoren Sn gelieferten Sensorsignalen (wie beispielsweise in Fig.3) ermittelt werden, beispielsweise in einer Recheneinheit 5.

Für die Ermittlung der Relativposition $x_R$ (oder auch der Absolutposition $x_A$) eines beweglichen Bauteils 2 wird eine Gruppe mit einer Anzahl j von Positionssensoren $Sn_j$ verwendet. Es werden natürlich solche Positionssensoren $Sn_j$ verwendet die Sensorantworten SAj liefern, die sich also im Bereich eines beweglichen Bauteils 2 befinden. Im Beispiel nach Fig.7 könnten beispielsweise die Positionssensoren Sn-2, Sn-1, Sn, Sn+1, Sn+2 verwendet werden. Alternativ könnten aber auch nur die Positionssensoren Sn-2, Sn-1, Sn oder die Positionssensoren Sn, Sn+1, oder andere, verwendet werden. Die verwendeten Positionssensoren Sn; müssen auch nicht zwingend unmittelbar benachbarte Positionssensoren Sn sein.

Die zur Bestimmung der Relativposition $x_R$ des beweglichen Bauteil 2 verwendeten Positionssensoren $Sn_j$ liefern, beispielsweise beim Hochfahren des Systems, folglich Sensorantworten $SA_j$, beispielsweise

$$SA_j = \begin{bmatrix} \gamma_j \\ |A|_j \end{bmatrix}$$

. Für eine beliebige Relativposition $x_{Rv}$ des beweglichen Bauteils 2 kann für jeden Positionssensor $Sn_j$ aus dem Sensormodell SM eine Sensormodellantwort $SA_j^*(x_{Rv})$ , beispielsweise

$$SA_j^* = \begin{bmatrix} \gamma_j^*(x_{Rv}) \\ |A|_j^*(x_{Rv}) \end{bmatrix}$$

, ermittelt werden.

Für die Bestimmung der Relativposition $x_R$ des beweglichen Bauteils 2 relativ zum ortsfesten Bauteil 1 wird die mit den berücksichtigten Positionssensoren $Sn_j$ erfasste Sensorantwort $SA_j$ mit den Sensormodellantworten $SA_j^*(x_{Rv})$ zu den variierten Relativposition $x_{Rv}$ verglichen. Diejenige variierte Relativposition $x_{Rv}$, bei der die Sensormodellantworten $SA_j^*(x_{Rv})$ der berücksichtigten Positionssensoren $Sn_j$ den mit den berücksichtigten Positionssensoren $Sn_j$ tatsächlich erfassten Sensorantworten $SA_j$ am nächsten kommt, wird als Relativposition $x_R$ des beweglichen Bauteils 2 verwendet oder für die Ermittlung der Relativposition $x_R$ (z.B. wenn diese auf einen anderen Punkt des beweglichen Bauteils 2 bezogen ist) oder der Absolutposition $x_A$ des beweglichen Bauteils 2 verwendet.

Für den Vergleich der Sensorantworten $SA_j$ mit den Sensormodellantworten $SA_j^*(x_{Rv})$ kann eine Kostenfunktion J als Funktion der Sensorantworten SA; und der Sensormodellantworten $SA_j^*(x_{Rv})$ verwendet werden, also $J = f(SA_j, SA_j^*(x_{Rv})) \quad \forall j$ , die die Abweichung zwischen den gemessenen Sensorantworten $SA_j$ und den Sensormodellantworten $SA_j^*(x_{Rv})$ der berücksichtigten Positionssensoren $Sn_j$ bewertet. Die Kostenfunktion J bewertet vorzugsweise alle j berücksichtigten Positionssensoren $Sn_j$. Die Kostenfunktion J lässt sich beispielsweise einfach als Betrag einer Differenz, beispielsweise

$$J = \sum_j \left| SA_j^*(x_{Rv}) - SA_j \right|$$

, oder als quadratischer Fehler, beispielsweise in der Form

$$J = \sum_j \left( SA_j^*(x_{Rv}) - SA_j \right)^2$$

, oder in beliebiger anderen geeigneten Form ansetzen. ist die Sensorantwort SA ein Vektor aus mehreren Größen, beispielsweise wie oben aus der Winkelinformation $\gamma$ und dem Absolutwert |A|, dann kann eine beliebige Norm, beispielsweise die Euklidische Norm $\| \|_2$ verwendet werden, also beispielsweise

$$J = \sum_j \left\| SA_j^*(x_{Rv}) - SA_j \right\|_2^2$$

.

Diejenige der variierten Relativpositionen $x_{Rv}$, die den Wert der Kostenfunktion optimiert (also entweder minimiert oder maximiert), ist dann die gesuchte Relativposition $x_R$ oder wird zur Ermittlung der Relativposition

$x_R$ oder der Absolutposition $x_A$ des beweglichen Bauteils 2 verwendet.

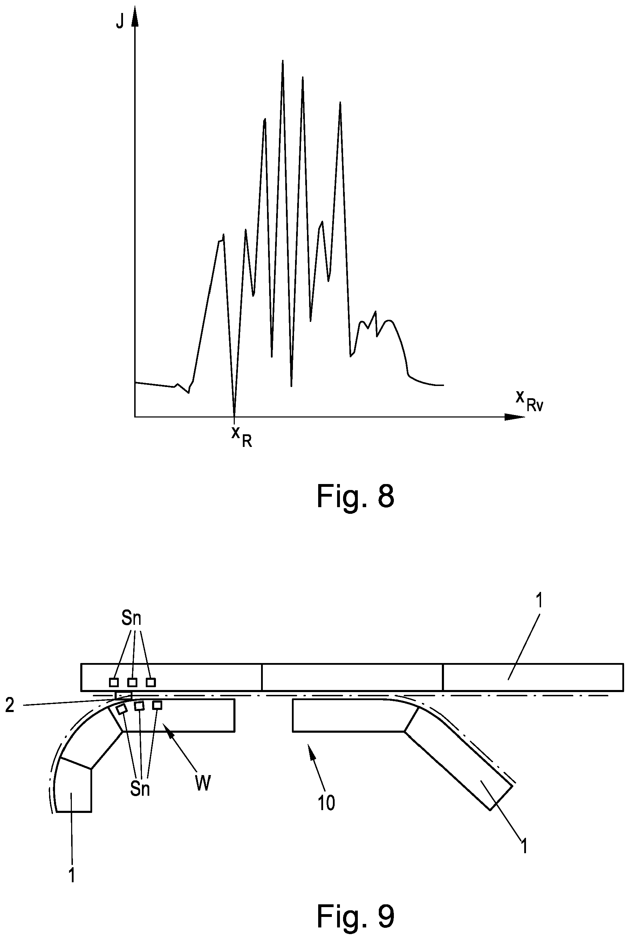

In einer ersten Ausgestaltung könnten die Relativpositionen $x_{Rv}$ in kleinen Positionsinkrementen $\Delta x_R$ variiert werden. Je kleiner das Positionsinkrement $\Delta x_R$, umso höher die Auflösung. in welchem Bereich die Relativposition $x_{Rv}$ variiert werden, kann vorgegeben sein, beispielsweise in Abhängigkeit von den bekannten geometrischen Abmessungen des beweglichen Bauteils 2 und/oder dem bekannten Sensorabstand s. in Fig.8 ist beispielsweise eine Kostenfunktion J bei einer solchen Variation dargestellt. Die Position am Minimum des Wertes der Kostenfunktion J im vorgegebenen Bereich, ist dann die gesuchte Relativposition $x_R$ oder wird zur Ermittlung der Relativposition $x_R$ oder der Absolutposition $x_A$ des beweglichen Bauteils 2 verwendet.

Vorteilhafter ist allerdings eine zweite mögliche Ausgestaltung der Positionsbestimmung. Wenn k die Anzahl der Positionsmagnete Pk am beweglichen Bauteil 2 angibt, dann kann ein bestimmter der verwendeten Positionssensoren $Sn_j$ das Magnetfeld eines dieser k Positionsmagnete Pk erfassen. Der bewegliche Bauteil 2 muss damit nur um k Polteilungen Tp variiert werden, um alle möglichen Positionen des beweglichen Bauteils 2 abzudecken. Damit kann man die Anzahl der zu variierenden Relativposition $x_{Rv}$ deutlich reduzieren, ohne an Genauigkeit bei der Positionsbestimmung einzubüßen. Auch in diesem Fall erhält man für jede der variierten Relativpositionen $x_{Rv}$ einen Wert für die Kostenfunktion J. Die Relativposition $x_{Rv}$ bei der der Wert der Kostenfunktion J optimal (entweder minimal oder maximal) ist, ist dann die gesuchte Relativposition $x_R$ oder wird zur Ermittlung der Relativposition $x_R$ oder der Absolutposition $x_A$ des beweglichen Bauteils 2 verwendet.

Es ist auch möglich, die Anzahl der zu variierenden Relativposition $x_{Rv}$ noch weiter zu reduzieren. Beispielsweise könnte man solche Relativposition $x_{Rv}$ ignorieren, deren zugehörigen Absolutwerte |A| eine bestimmte Grenze unterschreiten.

In einer weiteren möglichen Ausgestaltung kann die Kostenfunktion J in Abhängigkeit von der Relativposition $x_{Rv}$ in einer mathematischen Optimierung optimiert (minimiert oder maximiert) werden. Mathematisch kann das in der Form

$$J = f(SA_j, SA_j^*(x_{Rv})), \quad x_R = \min_{x_{Rv}} J$$

dargestellt werden. Die variierten Relativposition $x_{Rv}$ ergeben sich dabei aus dem Optimierungsalgorithmus, beispielsweise das Newton-Verfahren, ein Gradientenverfahren, Evolutionäre Algorithmen usw. Durch den Optimierungsalgorithmus wird die Relativposition $x_{Rv}$ iterativ so variiert, dass die Kostenfunktion J gegen das Minimum oder Maximum konvergiert und damit optimiert wird. Die erste Relativposition $x_{Rv}$ der Iteration kann beliebig oder durch das verwendete Optimierungsverfahren vorgegeben werden. Hierfür wird auch ein Abbruchkriterium vorgegeben, d.h. dass die Optimierung iterativ wiederholt wird, bis das Abbruchkriterium erreicht ist. Ein mögliches Abbruchkriterium ist das Unterschreiten (oder Überschreiten) eines vorgegeben Schwellwertes für die Kostenfunktion oder das Unterschreiten einer vorgegebenen Abweichung der Werte der Kostenfunktion J zweier aufeinanderfolgender Iterationen.

Es ist auch möglich, mehrere verschiedene Gruppen mit Positionssensoren $Sn_j$ zur Positionsbestimmung zu verwenden. Bestimmte Positionssensoren $Sn_j$ können auch in mehreren Gruppen enthalten sein, wobei sich die Gruppen aber jeweils durch zumindest einen Positionssensor $Sn_j$ unterscheiden. im Beispiel der Fig.7 könnte beispielsweise eine erste Gruppe die Positionssensoren $Sn-1$, $Sn$, $Sn+1$ umfassen und eine zweite Gruppe die Positionssensoren $Sn$, $Sn+1$, $Sn+2$. Die Anzahl der Positionssensoren $Sn_j$ in den Gruppen muss nicht übereinstimmen, d.h. eine erste Gruppe kann z.B. zwei Positionssensoren $Sn_j$ umfassen und eine andere Gruppe drei Positionssensoren $Sn_j$.

Damit kann für jede Gruppe von Positionssensoren $Sn_j$ eine Kostenfunktion J durch Variieren der Relativposition $x_{Rv}$ mit einem Verfahren wie oben beschrieben optimiert werden. Nun könnte eine Gruppe gewählt werden und die Relativposition $x_{Rv}$ bei der der Wert der Kostenfunktion J zu dieser Gruppe optimal (entweder minimal oder maximal) ist (oder allgemein die Relativposition $x_{RV}$, bei der die Abweichung zwischen den Sensormodellantworten und den gemessenen Sensorantworten am kleinsten ist), als gesuchte Relativposition $x_R$ verwendet werden oder zur Ermittlung der Relativposition $x_R$ oder der Absolutposition $x_A$ des beweglichen Bauteils 2 verwendet werden. Als Ergebnis der Optimierung der Kostenfunktion mit der anderen Gruppe könnte dann zur Plausibilisierung der Ermittlung der Relativposition $x_R$ (oder Absolutposition $x_A$) des beweglichen Bauteils 2 verwendet werden. Beispielsweise darf die Abweichung der beiden ermittelten Positionen einen bestimmten Wert nicht überschreiten. Man könnte beispielsweise diejenige Gruppe wählen, deren Wert der Kostenfunktion J am kleinsten ist und die anderen verwerfen oder zur Plausibilisierung verwenden.

Wenn mehrere unterschiedliche Sensormodelle SM vorhanden sind, beispielsweise weil verschiedene bewegliche Bauteile 2 vorhanden sind, dann ist die oben beschriebene Methode für jedes Sensormodell SM durchzuführen, also beispielsweise die Optimierung auf Basis jedes Sensormodells SM auszuführen. Damit liefert diese Methode nicht nur die Relativposition $x_R$ des beweglichen Bauteils 2, sondern auch die Information, um welchen beweglichen Bauteil 2 es sich handelt. Beispielsweise wird im Falle einer Optimierung einer Kostenfunktion J die Kostenfunktion J mit einem der Sensormodelle SM minimal werden, womit man schließen kann, dass es sich bei dem beweglichen Bauteil 2 um denjenigen handelt, der diesem Sensormodell SM zugrunde liegt.

Wenn ein einzelner beweglicher Bauteil 2 oder ein beweglicher Bauteil 2, der von anderen beweglichen Bauteilen ausreichend weit entfernt ist, vorhanden ist, dann wird das Minimum der Kostenfunktion J gegen Null gehen (in Abhängigkeit von der Genauigkeit des Sensormodells SM und der Genauigkeit der Einbauposition der Positionssensoren $Sn_j$).

Das erfindungsgemäße Verfahren zur Positionsbestimmung funktioniert aber auch dann, wenn zwei bewegliche Bauteile 2 eng aneinander stehen oder sogar direkt aneinander liegen. Unter "eng" wird dabei eine Anordnung verstanden, in der sich die Magnetfelder M der zwei beweglichen Bauteile 2 innerhalb der Messgenauigkeit der Positionssensoren Sn gegenseitig beeinflussen. Aufgrund des außerhalb der Positionsmagnete Pk stark abfallenden Magnetfeldes M kann angenommen werden, dass die Beeinflussung nur im Randbereich der beweglichen Bauteile 2 stattfinden wird. im Bereich der Beeinflussung wird die Sensormodellantwort SA* aus dem Sensormodell SM (das ja für einen isolierten Positionssensor Sn ermittelt wurde) für einen Positionssensor $Sn_j$ stärker von der damit gemessenen Sensorantwort SA abweichen. Nachdem am beweglichen Bauteil 2 aber mehrere Positionsmagnete Pk vorgesehen sind und für die Positionsbestimmung immer mehrere Positionssensoren Sn; berücksichtigt werden, gibt es Positionssensoren $Sn_j$, für die eine gute Übereinstimmung der Sensormodellantwort SA* aus dem Sensormodell SM und der gemessenen Sensorantwort SA gefunden werden kann. Diese reichen aus, um die Relativposition $x_R$ zu ermitteln. Das funktioniert sogar, wenn mehr als zwei bewegliche Bauteile 2 eng oder unmittelbar aneinander angrenzen. Es ist damit auch einfach möglich die Relativpositionen $x_R$ (oder Absolutposition $x_A$) mehrerer eng oder unmittelbar aneinander angrenzender beweglicher Bauteile 2 zu bestimmen. Nachdem durch das Sensormodell SM auch der bewegliche Bauteil 2 charakterisiert ist, kann man zusätzlich die Information erhalten, welche beweglichen Bauteile 2 eng oder unmittelbar aneinander angrenzen.

Es könnten zusätzlich noch Plausibilitätsprüfungen durchgeführt werden, insbesondere im Falle von eng oder unmittelbar aneinander angrenzenden beweglichen Bauteilen 2. Wenn aus den ermittelten Relativpositionen $x_R$ (oder Absolutpositionen $x_A$) zweier benachbarter beweglicher Bauteil 2 hervorgeht, dass sich die beweglichen Bauteile 2 überschneiden würden, dann ist ein Fehler in der Positionsbestimmung offensichtlich. Nachdem die Geometrien der beweglichen Bauteile 2 bekannt sind, kann eine derartige Plausibilitätsprüfung einfach durchgeführt werden. Wenn mehrere Gruppen von Positionssensoren $Sn_j$ für die Positionsbestimmung verwendet werden, dann könnten beispielsweise die bekannten Abmessungen des beweglichen Bauteils 2 verwendet werden, um eine Gruppe zur Positionsbestimmung auszuwählen. Beispielsweise kann mit den bekannten Abmessungen der beweglichen Bauteile 2 die Kostenfunktion J (die nicht unbedingt den kleinsten Wert haben muss) ausgewählt werden, die das Ergebnis der Positionsbestimmung plausibel macht.

Bei Langstatorlinearmotoren 10 gibt es häufig Statoraufbauten, bei denen zwei ortsfeste Bauteile 1 des Langstatorlinearmotors 10 an einer Weiche W zusammengeführt werden oder ein ortsfester Bauteil 1 an einer Weiche W in zwei ortsfeste Bauteile 1 aufgeteilt wird (je nach Bewegungsrichtung des beweglichen Bauteils 2), wie in Fig.9 dargestellt. Im Bereich einer Weiche W kann der bewegliche Bauteil 2 somit an einem der beiden beteiligten ortsfesten Bauteile 1 geführt sein. Mit der beschriebenen Methodik kann die Positionsbestimmung sogar im Bereich von Weichen W durchgeführt werden.

Es kann erwartet werden, dass sich ein Sensormodell SM des beweglichen Bauteils 2 genauer mit gemessenen Sensorantworten SA an einem ortsfesten Bauteil 1 der Weiche W in Deckung bringen lässt, als am anderen ortsfesten Bauteil 1 der Weiche W, weil die Luftspalte zwischen Positionssensoren Sn und Positionsmagneten Pk im Bereich der Weiche W unterschiedlich sind (was wiederum unterschiedliche Magnetfelder an den Positionssensoren Sn bewirkt). Bei Verwendung einer Kostenfunktion J wird diese für einen an der Weiche W beteiligten ortsfesten Bauteil 1 kleiner (oder größer) sein, als für den anderen an der Weiche W beteiligten ortsfesten Bauteil 1, weil die gemessenen Sensorantworten SA; durch den größeren Luftspalt stärker von den Sensormodellantworten $SA_j^*$ abweichen werde. Auf diese Weise kann mit dem gegenständlichen Verfahren zur Positionsbestimmung auch im Bereich der Weiche W die Relativposition $x_R$ (oder Absolutposition $x_A$) eines beweglichen Bauteils 2 in der Weiche W bestimmt werden. Zusätzlich kann dabei gleichzeitig auch bestimmt werden, an welchem der an einer Weiche W beteiligten ortsfesten Bauteile 1 sich der bewegliche Bauteil 2 gerade befindet.

Die beschriebene Methode zur Positionsbestimmung kann in einer Recheneinheit 5 durchgeführt werden. Die Recheneinheit 5 erhält dazu die benötigten Sensorantworten SA von den Positionssensoren Sn (wie in Fig.1 angedeutet). Die Recheneinheit 5 kann Teil einer Steuerung der Bewegungsanordnung sein, oder kann auch in einer solchen Steuerung integriert sein. Die Recheneinheit 5 ist vorzugsweise mikroprozessorbasiert, beispielsweise ein Computer, ein DSP (Digital Signal Processor), ein PLC (Programmable Logic Controller) oder ähnliches, und die Methode zur Positionsbestimmung kann als Software implementiert und zur Ausführung auf der Recheneinheit 5 gespeichert sein. Die Recheneinheit 5 kann aber auch ein ASCI (Application Specific Integrated Circuit) oder ein FPGA (Field Programmable Gate Array) sein, in denen auch ein Mikroprozessor integriert sein kann. Auch jede andere geeignete Hardware kann als Recheneinheit 5 verwendet werden. Die zur Durchführung benötigten Sensormodelle SM können in einer Speichereinheit 6 der Recheneinheit 5 gespeichert sein. in der Speichereinheit 6 können auch weitere unter Umständen benötigte Daten gespeichert sein, beispielsweise die Geometrie der beweglichen Bauteile 2, die Einbaupositionen der Positionssensoren Sn usw. Die Recheneinheit 5 kann auch bekannte Ein-/Ausgabegeräte umfassen und/oder Datenschnittstellen zur Datenkommunikation mit anderen Komponenten (z.B. die Steuerung der Bewegungsanordnung), beispielsweise über einen Feldbus, wie Ethernet POWERLINK, DeviceNet, Profibus, CAN usw., oder anderen Bussystemen, wie Ethernet usw.

## Patentansprüche

1. Verfahren zur Positionsbestimmung zumindest eines beweglichen Bauteils (2) relativ zu einem ortsfesten Bauteil (1), wobei am bewegliche Bauteil (2) eine Anordnung einer Mehrzahl von Positionsmagneten (Pk) mit einer Polteilung (Tp) und am ortsfesten Bauteil (1) eine Anordnung mit einer Mehrzahl von Positionssensoren (Sn) mit einer Sensorteilung (s) angeordnet werden, wobei mit den Positionssensoren (Sn) jeweils ein Magnetfeld (M) eines Positionsmagneten (Pk) im Bereich dieses Positionssensors (Sn) in Form einer Sensorantwort (SA) erfasst wird, **dadurch gekennzeichnet, dass** für eine Gruppe von für die Positionsbestimmung berücksichtigten mehreren Positionssensoren (Sn_j) im Bereich des beweglichen Bauteils (2) die Sensorantworten (SA_j) erfasst werden, dass ein Sensormodell (SM) bereit gestellt wird, das für den zumindest einen beweglichen Bauteil (2) und einen Positionssensor (Sn) Sensormodellantworten $(SA^* (x_R))$ in Abhängigkeit einer Relativposition ($x_R$) des beweglichen Bauteils (2) relativ zum Positionssensor (Sn) liefert, dass mit dem Sensormodell (SM) für eine Mehrzahl von angenommenen verschiedenen Relativpositionen ($x_{Rv}$) des beweglichen Bauteils (2) relativ zum ortsfesten Bauteil (1) Sensormodellantworten $\left(SA_j^*\left(x_{Rv}\right)\right)$ aller Positionssensoren (Sn_j) der Gruppe von Positionssensoren (Sn_j) ermittelt werden, **dass** die Sensormodellantworten $\left(SA_j^*\left(x_{Rv}\right)\right)$ mit den mit der Gruppe von Positionssensoren (Sn_j) erfassten Sensorantworten (SA_j) verglichen werden **und dass** die Relativposition ($x_{Rv}$) aus der Mehrzahl von angenommenen verschiedenen Relativpositionen ($x_{Rv}$) mit der kleinsten Abweichung zwischen den Sensormodellantworten $\left(SA_j^*\left(x_{Rv}\right)\right)$ aus dem Sensormodell (SM) und den erfassten Sensorantworten (SA_j) als Relativposition ($x_R$) des beweglichen Bauteils (2) verwendet wird oder daraus die Relativposition ($x_R$) des beweglichen Bauteils (2) oder eine auf einen ortsfesten Referenzpunkt (RP) bezogene Absolutposition ($x_A$) des beweglichen Bauteils (2) ermittelt wird.

2. Verfahren nach Anspruch 1, **dadurch gekennzeichnet, dass** das Sensormodell (SM) ermittelt wird, indem der Verlauf der Sensormodellantworten

$$(SA_j^*(x_R))$$

erfasst wird, wenn die Anordnung der Mehrzahl von Positionsmagneten (Pk) am ortsfesten Bauteil (1) entlang des einen Positionssensors (Sn) vorbeibewegt wird.

3. Verfahren nach Anspruch 1, **dadurch gekennzeichnet, dass** zum Vergleichen der Sensormodellantworten $(SA_j^*(x_{Rv}))$ mit den mit der Gruppe von Positionssensoren (SAj) erfassten Sensorantworten ($SA_j$) eine Kostenfunktion (J) angesetzt wird, die die Abweichung zwischen den erfassten Sensorantworten ($SA_j$) und den Sensormodellantworten

$$(SA_j^*(x_{Rv}))$$

der Gruppe von Positionssensoren ($Sn_j$) bewertet **und dass** diejenige der Mehrzahl von verschiedenen Relativpositionen ($x_{Rv}$), die den Wert der Kostenfunktion (J) optimiert, als Relativposition ($xR$) des beweglichen Bauteils (2) verwendet wird oder daraus die Relativposition ($x_R$) des beweglichen Bauteils (2) oder eine auf einen ortsfesten Referenzpunkt (RP) bezogene Absolutposition ($x_A$) des beweglichen Bauteils (2) ermittelt wird.

4. Verfahren nach Anspruch 1 oder 3, **dadurch gekennzeichnet, dass** die Mehrzahl der angenommenen verschiedenen Relativpositionen ($x_{Rv}$) ermittelt wird, indem die Relativposition des beweglichen Bauteils (2) mit einem vorgegebenen Positionsinkrement variiert wird.

5. Verfahren nach Anspruch 1 oder 3, **dadurch gekennzeichnet, dass** die Mehrzahl der angenommenen verschiedenen Relativpositionen ($x_{Rv}$) ermittelt wird, indem eine mathematische Optimierung der Kostenfunktion (J) nach der Relativposition ($x_{Rv}$) durchgeführt wird, wobei durch die Optimierung die Relativposition ($x_{Rv}$) variiert wird.

6. Verfahren nach Anspruch 1 oder 3, **dadurch gekennzeichnet, dass** die Mehrzahl der angenommenen verschiedenen Relativpositionen ($x_{Rv}$) ermittelt wird, indem die Relativposition des beweglichen Bauteils (2) um zumindest eine Polteilung (Tp) variiert wird.

7. Verfahren nach Anspruch 6, **dadurch gekennzeichnet, dass** die Relativposition ($x_{Rv}$) des beweglichen Bauteils (2) um eine Anzahl von Polteilungen (Tp) variiert wird, die der Anzahl oder höchstens der Anzahl der Positionsmagnete (Pk) am beweglichen Bauteil (2) entspricht.

8. Verfahren nach einem der Ansprüche 1 bis 7, **dadurch gekennzeichnet, dass** zumindest eine weitere Gruppe von Positionssensoren ($Sn_j$) verwendet wird und die Sensormodellantworten $(SA_j^*(x_{Rv}))$ mit den mit der zumindest einen weiteren Gruppe von Positionssensoren ($Sn_j$) erfassten Sensorantworten ($SA_j$) verglichen werden **und dass** die Relativposition ($x_R$) des beweglichen Bauteils (2) oder eine auf einen ortsfesten Referenzpunkt (RP) bezogene Absolutposition (xA) des beweglichen Bauteils (2) anhand derjenigen Gruppe von Positionssensoren ($Sn_j$) ermittelt wird, die die kleinste Abweichung zwischen den Sensormodellantworten

$$(SA_j^*(x_{Rv}))$$

aus dem Sensormodell (SM) und den erfassten Sensorwerten ($Sn_j$) ergibt.

9. Bewegungsanordnung mit zumindest einem beweglichen Bauteil (2), der relativ zu einem ortsfesten Bauteil (1) beweglich angeordnet ist, wobei am beweglichen Bauteil (2) eine Anordnung einer Mehrzahl von Positionsmagneten (Pk) mit einer Polteilung (Tp) und am ortsfesten Bauteil (1) eine Anordnung mit einer Mehrzahl von Positionssensoren (Sn) mit einer Sensorteilung (s) angeordnet sind, und mit den Positionssensoren (Sn) jeweils ein Magnetfeld (M) eines Positionsmagneten (Pk) (Sn) im Bereich dieses Positionssensors in Form einer Sensorantwort (SA) erfassbar ist, wobei zur Positionsbestimmung des beweglichen Bauteils (2) relativ zum ortsfesten Bauteil (1) eine Recheneinheit (5) vorgesehen ist, die konfiguriert ist, die Sensorantworten (SA) von Positionssensoren (Sn) zu verarbeiten, **dadurch gekennzeichnet, dass** die Recheneinheit (5) konfiguriert ist, für eine Gruppe von für die Positions-bestimmung berücksichtigten Positionssensoren ($Sn_j$) im Bereich des beweglichen Bauteils (2) die Sensorantworten ($SA_j$) zu erfassen, **dass** eine Speichereinheit (6) vorgesehen ist, in der ein Sensormodell (SM) gespeichert ist, das für den zumindest einen beweglichen Bauteil (2) und einen Positionssensor (Sn) Sensormodellantworten (SA*) in Abhängigkeit einer Relativposition ($x_R$) des beweglichen Bauteils (2) relativ zum Positionssensor (Sn) liefert, dass die Recheneinheit (5) konfiguriert ist, für eine Mehr-zahl von angenommenen verschiedenen Relativpo-sitionen ($x_{Rv}$) des beweglichen Bauteils (2) relativ zum ortsfesten Bauteil (1) mit dem Sensormodell

(SM) Sensormodellantworten $(SA_j^*(x_{Rv}))$ der Gruppe von Positionssensoren ($Sn_j$) zu ermitteln, **dass** die Recheneinheit (5) konfiguriert ist, die Sensormodellantworten ( $SA_j^*(x_{Rv})$ ) mit den mit der Gruppe von Positionssensoren ($Sn_j$) erfassten Sensorantworten ($SA_j$) zu vergleichen und **dass** die Recheneinheit (5) konfiguriert ist, die Relativposition ($x_{Rv}$) aus der Mehrzahl von angenommenen verschiedenen Relativpositionen ($x_{Rv}$) mit der kleinsten Abweichung zwischen den Sensormodellantworten $(SA_j^*(x_{Rv}))$ aus dem Sensormodell (SM) und den erfassten Sensorantworten ($SA_j$) als Relativposition ($x_R$) des beweglichen Bauteils (2) zu ermitteln oder daraus die Relativposition ($x_R$) des beweglichen Bauteils (2) oder eine auf einen ortsfesten Referenzpunkt (RP) bezogene Absolutposition (xA) des beweglichen Bauteils (2) zu ermitteln.

**Claims**

1. A method for determination of the position of at least one movable component (2) relative to a stationary component (1), wherein an array of a plurality of position magnets (Pk) with a pole pitch (Tp) is arranged on the movable component (2) and an arrangement with a plurality of position sensors (Sn) with a sensor pitch (s) is arranged on the stationary component (1), wherein with the position sensors (Sn), in each case a magnetic field (M) of a position magnet (Pk) in the region of this position sensor (Sn) is detected in the form of a sensor response (SA), **characterized in that** the sensor responses ($SA_j$) are detected for a group of a plurality of position sensors ($Sn_j$) in the region of the movable component (2) considered for the position determination, **in that** a sensor model (SM) is provided which, for the at least one movable component (2) and a position sensor (Sn), supplies sensor model responses $(SA_j^*(x_R))$ as a function of a relative position ($x_R$) of the movable component (2) relative to the position sensor (Sn), **in that** for a plurality of assumed different relative positions ($x_{Rv}$) of the movable component (2) relative to the stationary component (1) sensor model responses $(SA_j^*(x_{Rv}))$ of all position sensors (Sn) of the group of position sensors ($Sn_j$) are determined with the sensor model (SM), **in that** the sensor model responses $(SA_j^*(x_{Rv}))$ are compared with the sensor responses ($SA_j$) detected with the group of position sensors ($Sn_j$), **and in that** the relative position ($x_{Rv}$) from the plurality of assumed different relative positions ($x_{Rv}$) with the smallest deviation between the sensor model responses $(SA_j^*(x_{Rv}))$ from the sensor model (SM) and the detected sensor responses ($SA_j$) is used as the relative position ($x_R$) of the movable component (2) or, from this, the relative position ($x_R$) of the movable component (2) or an absolute position ($x_A$) of the movable component (2) related to a stationary reference point (RP) is determined.

2. The method according to claim 1, **characterized in that** sensor model (SM) is determined by detecting the profile of the sensor model responses $(SA_j^*(x_{Rv}))$ when the array of the plurality of position magnets (Pk) is moved past the position sensor (Sn) on the stationary component (1).

3. The method according to claim 1, **characterized in that** for comparison of the sensor model responses $(SA_j^*(x_{Rv}))$ with the sensor responses ($SA_j$) detected by the group of position sensors (SAj) a cost function (J) is formulated that evaluates the deviation between the detected sensor responses ($SA_j$) and the sensor model responses $(SA_j^*(x_{Rv}))$ of the group of position sensors ($Sn_j$), **and in that** the one of the plurality of different relative positions ($x_{Rv}$) which optimizes the value of the cost function (J) is used as the relative position ($x_R$) of the movable component (2) or, from this, the relative position ($x_R$) of the movable component (2) or an absolute position ($x_A$) of the movable component (2) related to a stationary reference point (RP) is determined.

4. The method according to claim 1 or 3, **characterized in that** the plurality of the assumed different relative positions ($x_{Rv}$) is determined by varying the relative position of the movable component (2) with a predetermined position increment.

5. The method according to claim 1 or 3, **characterized in that** the plurality of the assumed different relative positions ($x_{Rv}$) is determined by performing a mathematical optimization of the cost function (J) with respect to the relative position ($x_{Rv}$), wherein the relative position ($x_{Rv}$) is varied by the optimization.

6. The method according to claim 1 or 3, **characterized in that** the plurality of the assumed different relative positions ($x_{Rv}$) is determined by varying the relative position of the movable component (2) by at least one pole pitch (Tp).

7. The method according to claim 6, **characterized in that** the relative position ($x_{Rv}$) of the movable component (2) is varied by a number of pole pitches (Tp) which corresponds to the number, or at most the number, of position magnets (Pk) on the movable component (2).

8. The method according to any of claims 1 to 7, **characterized in that** at least one further group of position sensors ($Sn_j$) is used and the sensor model responses $(SA_j^*(x_{Rv}))$ are compared with the sensor responses ($SA_j$) detected by the at least one further group of position sensors ($Sn_j$), **and in that** the relative position ($x_R$) of the movable component (2), or an absolute position ($x_A$) of the movable component (2) related to a stationary reference point (RP) is determined with reference to the group of position sensors ($Sn_j$) which has the smallest deviation between the sensor model responses $(SA_j^*(x_{Rv}))$ from the sensor model (SM) and the detected sensor values ($Sn_j$).

9. A movement arrangement with at least one movable component (2) which is arranged movably relative to a stationary component (1), wherein an array of a plurality of position magnets (Pk) with a pole pitch (Tp) is arranged on the movable component (2) and an arrangement with a plurality of position sensors (Sn) with a sensor pitch (s) is arranged on the stationary component (1), and with the position sensors (Sn) in each case a magnetic field (M) of a position magnet (Pk) in the region of this position sensor is detectable in the form of a sensor response (SA), wherein a computing unit (5) is provided that is configured to process the sensor responses (SA) from position sensors (Sn) for determination of the position of the movable component (2) relative to the stationary component (1), **characterized in that** the computing unit (5) is configured to detect the sensor responses ($SA_j$) for a group of position sensors ($Sn_j$) considered for the position determination in the region of the movable component (2), **in that** a memory unit (6) is provided in which a sensor model (SM) is stored, which for the at least one movable component (2) and a position sensor (Sn) supplies sensor

model responses $(SA_j^*(x_R))$ as a function of a relative position ($x_R$) of the movable component (2) relative to the position sensor (Sn), **in that** the computing unit (5) is configured to determine for a plurality of assumed different relative positions ($x_{Rv}$) of the movable component (2) relative to the stationary component (1) sensor model responses $(SA_j^*(x_{Rv}))$ of the group of position sensors ($Sn_j$) with the sensor model (SM), **in that** the computing unit (5) is configured to compare the sensor model responses $(SA_j^*(x_{Rv}))$ with the sensor responses ($SA_j$) detected by the group of position sensors ($Sn_j$), **and in that** the computing unit (5) is configured to determine the relative position ($x_{Rv}$) from the plurality of assumed different relative positions ($x_{Rv}$) with the smallest deviation between the sensor model responses $(SA_j^*(x_{Rv}))$ from the sensor model (SM) and the detected sensor responses ($SA_j$) as the relative position ($x_R$) of the movable component (2), or to determine from this the relative position ($x_R$) of the movable component (2) or an absolute position (xA) of the movable component (2) related to a stationary reference point (RP).

**Revendications**

1. Procédé de détermination de position d'au moins un composant mobile (2) par rapport à un composant fixe (1), dans lequel, sur le composant mobile (2), un agencement d'une pluralité d'aimants de position (Pk) avec une division des pôles (Tp) est agencé et, sur le composant fixe (1), un agencement d'une pluralité de capteurs de position (Sn) avec une division de capteur (s) est agencé, dans lequel, avec les capteurs de position (Sn), un champ magnétique (M) d'un aimant de position (Pk) est respectivement détecté dans la zone de ce capteur de position (Sn) sous la forme d'une réponse de capteur (SA), **caractérisé en ce que** pour un groupe de plusieurs capteurs de position ($Sn_j$) pris en compte pour la détermination de position, les réponses de capteur ($SA_j$) sont détectées dans la zone du composant mobile (2), **en ce que** un modèle de capteur (SM) est mis à disposition, qui délivre, pour l'au moins un composant mobile (2) et un capteur de position (Sn), des réponses de modèle de capteur *(SA\*($x_R$))* en fonction d'une position RELATIVE ($x_R$) du composant mobile (2) par rapport au capteur de position (Sn), **en ce que,** avec le modèle de capteur (SM) pour une pluralité de positions relatives différentes adoptées ($x_{Rv}$) du composant mobile (2) par rapport au composant fixe (1), des réponses de modèle de capteur ($SA^*(x_{Rv})$) de tous les capteurs de position ($Sn_j$) du groupe de capteurs de position ($Sn_j$) sont déterminées, **en ce que** les réponses de modèle de capteur ($SA^*_j(x_{Rv})$) sont comparées aux réponses de capteur ($SAj$) détectées avec le groupe de capteurs de position ($Sn_j$) **et en ce que** la position relative ($x_{Rv}$) parmi la pluralité de positions relatives différentes adoptées ($x_{Rv}$) avec le plus petit écart entre les réponses de modèle de capteur ($SA^*_j(x_{Rv})$) provenant du modèle de capteur (SM) et les réponses de capteur ($SA_j$) détectées est utilisée comme position relative ($x_R$) du composant mobile (2) ou la position relative ($x_R$) du composant mobile (2) ou une position absolue ($x_A$) du composant mobile (2) par rapport à un point de référence fixe (RP) est déterminée à partir de celle-ci.

2. Procédé selon la revendication 1, **caractérisé en ce que** le modèle de capteur (SM) est déterminé, **en ce que** le tracé des réponses de modèle de capteur ($SA^*j(x_R)$) est détecté, lorsque l'agencement de la pluralité d'aimants de position (Pk) sur le composant fixe (1) est déplacé à côté le long du capteur de position (Sn).

3. Procédé selon la revendication 1, **caractérisé en ce que,** pour comparer les réponses de modèle de capteur ($SA^*(x_{Rv})$) aux réponses de capteur ($SA_j$) détectées avec le groupe de capteurs de position (Saj), une fonction de coût (J) est utilisée, qui évalue l'écart entre les réponses de capteur détectées ($SA_j$) et les réponses de modèle de capteur ($SA^*_j(x_{Rv})$) du groupe de capteurs de position ($Sn_j$) **et en ce que** celle de la pluralité de positions relatives différentes ($x_{Rv}$), qui optimise la valeur de la fonction de coût (J), est utilisée comme position relative (xR) du composant mobile (2) ou la position relative ($x_R$) du composant mobile (2) ou une position absolue ($x_A$) du composant mobile (2) par rapport à un point de référence fixe (RP) est déterminée à partir de celle-ci.

4. Procédé selon la revendication 1 ou 3, **caractérisé en ce que** la pluralité de positions relatives différentes adoptées ($x_{Rv}$) est déterminée **en ce que** la position relative du composant mobile (2) est modifiée avec un incrément de position prédéfini.

5. Procédé selon la revendication 1 ou 3, **caractérisé en ce que** la pluralité de positions relatives différentes adoptées ($x_{Rv}$) est déterminée **en ce qu'une** optimisation mathématique de la fonction de coût (J) est réalisée selon la position relative ($x_{Rv}$), dans lequel la position relative ($x_{Rv}$) est modifiée par l'optimisation.

6. Procédé selon la revendication 1 ou 3, **caractérisé en ce que** la pluralité de positions relatives différentes adoptées ($x_{Rv}$) est déterminée **en ce que** la position relative du composant mobile (2) est modifiée d'au moins une division des pôles (Tp).

7. Procédé selon la revendication 6, **caractérisé en ce que** la position relative ($x_{Rv}$) du composant mobile (2) est modifiée d'un certain nombre de divisions des pôles (Tp), qui correspond au nombre ou au maximum au nombre des aimants de position (Pk) sur le composant mobile (2).

8. Procédé selon l'une quelconque des revendications 1 à 7,
   **caractérisé en ce qu'**au moins un autre groupe de capteurs de position ($Sn_j$) est utilisé et les réponses de modèle de capteur ($SA^*_j(x_{Rv})$) sont comparées aux réponses de capteur ($SA_j$) détectées avec l'au moins un autre groupe de capteurs de position ($Sn_j$) **et en ce que** LA POSITION RELATIVE (XR) du composant mobile (2) ou une position absolue (xA) du composant mobile (2) par rapport à un point de référence fixe (RP) est déterminée à l'aide du groupe de capteurs de position ($Sn_j$) qui donne le plus petit écart entre les réponses de modèle de capteur ($SA^*_J(x_{Rv})$) provenant du modèle de capteur (SM) et les valeurs de capteurs détectées ($Sn_j$).

9. Agencement de déplacement avec au moins un composant mobile (2), qui est disposé mobile par rapport à un composant fixe (1), dans lequel, sur le composant mobile (2), un agencement d'une pluralité d'aimants de position (Pk) avec une division des pôles (Tp) est agencé et, sur le composant fixe (1), un agencement avec une pluralité de capteurs de position (Sn) avec une division de capteur (s) est agencé et avec les capteurs de position (Sn), un champ magnétique (M) d'un aimant de position (Pk) (Sn) peut respectivement être détecté dans la zone de ce capteur de position sous la forme d'une réponse de capteur (SA), dans lequel pour la détermination de position du composant mobile (2) par rapport au composant fixe (1) une unité de calcul (5) est prévue, qui est configurée pour traiter les réponses de capteur (SA) des capteurs de position (Sn), **caractérisé en ce que** l'unité de calcul (5) est configurée pour détecter les réponses de capteur ($SA_j$) pour un groupe de capteurs de position ($Sn_j$) pris en compte pour la détermination de position dans la zone du composant mobile (2), **en ce qu'**une unité de mémoire (6) est prévue, dans laquelle un modèle de capteur (SM) est mémorisé, qui délivre pour l'au moins un composant mobile (2) et un capteur de position (Sn) des réponses de modèle de capteur ($SA^*$) en fonction d'une position relative ($x_R$) du composant mobile (2) par rapport au capteur de position (Sn), **en ce que** l'unité de calcul (5) est configurée pour déterminer, pour une pluralité de positions relatives différentes adoptées ($x_{Rv}$) du composant mobile (2) par rapport au composant fixe (1) avec le modèle de capteur (SM), des réponses de modèle de capteur ($SA^*_j(x_{Rv})$) du groupe de capteurs de position (Sn,), **en ce que** l'unité de calcul (5) est configurée pour comparer les réponses de modèle de capteur ($SA^*_j(x_{Rv})$) aux réponses de capteur ($Sa_j$) détectées avec le groupe de capteurs de position ($Sn_j$) **et en ce que** l'unité de calcul (5) est configurée pour déterminer la position relative ($x_{Rv}$) à partir de la pluralité de positions relatives différentes adoptées ($x_{Rv}$) avec le plus petit écart entre les réponses de modèle de capteur ($SA^*_j(x_{Rv})$) provenant du modèle de capteur (SM) et les réponses de capteur détectées ($SA_j$) en tant que position relative ($x_R$) du composant mobile (2) ou pour déterminer, à partir de celle-ci, la position relative ($x_R$) du composant mobile (2) ou une position absolue (xA) du composant mobile (2) par rapport à un point de référence fixe (RP).

Fig. 1

Fig. 4

Fig. 2

Fig. 3

Fig. 5

EP 4 028 725 B1

Fig. 6

EP 4 028 725 B1

Fig. 7

Fig. 8

Fig. 9

**IN DER BESCHREIBUNG AUFGEFÜHRTE DOKUMENTE**

**In der Beschreibung aufgeführte Patentdokumente**

- US 7932684 B2
- US 7994742 B2
- US 6876107 B2
- EP 3376166 A1
- EP 3361220 A1